Europäisches Patentamt

European Patent Office

Office européen des brevets

(19)

(11) Publication number: 0 062 449
B1

# (12) EUROPEAN PATENT SPECIFICATION

(45) Date of publication of patent specification: 30.04.86

(51) Int. Cl.⁴: B 23 P 15/00

(21) Application number: 82301535.9

(22) Date of filing: 24.03.82

(54) Composite metallic forging.

(30) Priority: 26.03.81 GB 8109578

(43) Date of publication of application:
13.10.82 Bulletin 82/41

(45) Publication of the grant of the patent:
30.04.86 Bulletin 86/18

(84) Designated Contracting States:
DE FR IT NL SE

(56) References cited:
DE-B-1 808 975
GB-A-1 185 683
US-A-1 948 793
US-A-3 067 593
US-A-3 460 235
US-A-3 779 446

(73) Proprietor: Inco Alloy Products Limited
Wiggin Street
Birmingham B16 OAJ (GB)
(73) Proprietor: REED TUBULAR PRODUCTS
COMPANY
700 Reed Road
Sugar Land Texas (US)

(72) Inventor: Biddle, Barry
61 Charnock Hall Road
Sheffield 12 (GB)
Inventor: Dilkes, George Christopher
19 Foxhill Drive
Sheffield 6 (GB)
Inventor: Garratt, Ernest Peter
17 Briarfields Lane
Worrall Sheffield S30 3AA (GB)
Inventor: Volmert, Elmer James
7606 Braesdale
Houston Texas 77071 (US)

(74) Representative: Knowles, Audrey Elizabeth et al
624 Pershore Road
Selly Park Birmingham B29 7HG (GB)

Courier Press, Leamington Spa, England.

## Description

The present invention relates to drill pipe tool joints.

In the drilling of bore holes through underground formations for the purposes of locating and recovering oil and gas and for the forming of mining blast holes and the creation of water wells, the normal procedure is to locate a drilling bit at the bottom of a "drill string" and rotate the bit to disintegrate and fracture the formation being drilled. The drill string comprises a long string of tubular members formed of a tough steel alloy with relatively thick walls and heavy, tough, threaded end-sections. The tubular members comprising a drill string are commonly referred to as "drill-pipe", and the threaded end-sections on the drill pipe are commonly referred to as "tool joints". Each section of drill pipe normally runs from 25 to 35 feet in length and has secured on opposed ends thereof a male tool joint member and a female tool joint member each having threaded portions located thereon accordingly. Most applications of tool joints to drill pipe are achieved through some technique of welding such as flash welding, friction welding or inertia welding resulting in a planar weld interface between the tool joint and the drill pipe.

Conventional tool joints are normally made from a low alloy steel known as 4137-H steel which is heat treated to more than 827 N/mm² yield strength in the threaded connection. However, many wells presently drilled are in sour environments, that is they contain hydrogen sulphide, often also in the presence of carbon dioxide and chloride-containing water. These corrosive constituents can give rise to early failure in the threaded end of such conventional tool joints, due, inter alia to sulphide stress cracking even though they are operating at a stress level only in the range 344.7 to 551.6 N/mm².

Replacement of the low alloy steel of conventional tool joints with a highly alloyed steel, nickel based alloy or other alloy having desired properties of strength and/or corrosion resistance may considerably increase the cost of the tool joint, which may be prohibitive in the case of the use of the most desirable alloys. Moreover, this solution can suffer from joint problems at the planar weld interface obtained when the dissimilar alloys of the tool joint and drill pipe are welded together.

U.S. Patent No. 3,067,593 discloses a tool joint-drill pipe construction in which the increased cost of using special alloys for the tool joint is kept to a minimum by the use of a tool joint member comprising a threaded male pin ring or threaded female box ring which is formed separately from the drill pipe and is welded to a thickened bell integrally formed on the end of the drill pipe.

In the construction of U.S. Patent No. 3,067,593, the separately formed tool joint member is made entirely from one alloy and the weld interface between the tool joint member and the drill pipe bell is planar. Consequently, where the alloy used for the separately formed tool joint member is different to that used for the drill pipe and hence the thickened bell, the afore-mentioned joint problem resulting from the planar weld interface between the dissimilar alloys of the tool joint member and the thickened bell still remains. A further disadvantage encountered with the construction of this U.S. Patent is the requirement for the end of the drill pipe to be specially shaped to produce the thickened bell for attachment to the separately formed tool joint member.

U.S. Patent No. 3,460,235 discloses a transition piece for joining two materials which cannot be welded together satisfactorily, for example for joining copper to aluminium or aluminium to stainless steel. The transition piece is constructed from the materials to be joined and is interposed between the materials so that each material can be joined to the same material in the transition piece.

U.S. Patent No. 1,948,793 discloses a method of making a bimetallic poppet valve for an internal combustion engine. The method comprises butt welding two blanks of different metals to form the head and stem of the valve and subsequently swaging the composite blank to shape the valve. The butt welded joint is spread out due to the lengthening and reduction in thickness of the stem during the swaging operation.

The present invention as claimed is intended to remedy the drawbacks of the known drill pipe tool joints. It solves the problem of how to design a drill pipe tool joint which has a threaded portion capable of withstanding the operating conditions and which may be welded to the end of a drill pipe without encountering joint problems at the resulting planar weld interface and without requiring any special shaping of the end of the drill pipe by forming the threaded portion of the tool joint from a corrosion resistant alloy and the remaining portion of the tool joint from low alloy steel, the two alloys being metallurgically bonded together and worked during the shaping of the tool joint such that the interface between the two alloys is non-planar.

The advantages offered by the present invention are mainly that the corrosion resistant alloy of the threaded portion is not welded directly to the drill pipe but is bonded to a low alloy steel which may be satisfactorily welded to the drill pipe. By constructing the tool joint in this way, a non-planar interface is obtained between the corrosion resistant alloy and the low alloy steel within the tool joint itself and the joint problem encountered with a planar interface obtained from the direct welding of a corrosion resistant alloy to a dissimilar alloy of a drill pipe is avoided. Furthermore, the end of the drill pipe does not have to be specially shaped for attachment of the invented tool joint.

Tool joints of the present invention are normally made from a composite billet of solid bar formed by metallurgically bonding together billets of the corrosion resistant alloy and the low alloy steel. The composite billet is pierced prior to forging to form a rough tubular forging from which the tool joint is formed. Alternatively the starting billets may be hollow cylinders and the step of piercing the composite billet omitted.

Preferably the two billets are joined by a metallurgical bond in such a way that contamination of the interface between the two surfaces during forging is avoided. One way of achieving this is by friction welding which involves spinning one or both of the members to be welded at a relatively high speed against one another until the friction of the rubbing contact along the interface raises the temperature of the members high enough to allow the formation of a weld between the two members when pressed rapidly and forcefully together. Alternative welding techniques include electron beam welding, diffusion bonding, flash welding, inertia welding, laser welding or plasma arc welding. Some of these techniques are already well known in the oilfield tubular products art and may also be successfully employed to join the two starting billets.

We have found that it may not be essential to have 100% metallurgical bond between the two billets of the composite billet prior to forging but that, due to the nature of the processing, a 100% metallurgical bond may still be achieved in the final product.

The forging process is normally carried out in an extrusion press, and the rough tubular forging is subsequently heat treated to achieve an optimum combination of properties of the two alloys, and is then machined to form the threaded portion of the finished tool joint.

Tool joints of the present invention contain only the minimum amount possible of the expensive corrosion resistant alloy and are thus not significantly more expensive than conventional tool joints.

The interface between the dissimilar alloys forming the tool joints of the present invention will have more uniform properties since any welded heat affected zone formed on joining the two billets will be heavily worked during forging and its grain size will not be significantly different from the bulk of the material. Moreover, during forging the interface is deformed so as to extend in a generally axial direction down a portion of the body of the finished tool joint whereby the resultant non-planar interface has a greater cross-sectional area and improved integrity than the initial transverse joint in the composite billet. This increased area of weld interface would result in a lower unit stress level under the normal load application.

Tool joints of the present invention are preferably male tool joints i.e. having a tapered threaded pin end for engagement with a threaded box end of a female tool joint, the tapered portion being formed of the desired corrosion resistant alloy.

An exemplary embodiment of the invention will now be described having reference to the accompanying drawings in which:—

Figure 1 is a cross-sectional side view of a composite billet for use in producing a drill pipe tool joint according to the present invention;

Figure 2 is a side view of a rough tubular forging made from the composite billet shown in Figure 1;

Figure 3 is a cross-sectional side view of the forging shown in Figure 2 indicating the non-planar weld interface;

Figure 4 is a side view of the finished tool joint; and

Figure 5 is a side view of the tool joint shown in Figure 4 affixed to a section of drill pipe.

The pin end of a tool joint/drill pipe combination normally incurs the greatest stress corrosion cracking when drilling in extreme conditions. Therefore, in the following description of an exemplary embodiment, the invention is described in conjunction with a male tool joint providing the pin end of a tool joint/drill pipe combination rather than a female tool joint providing the box end of a tool joint/drill pipe combination. It should be noted, however, that the invention is readily adaptable to female tool joints.

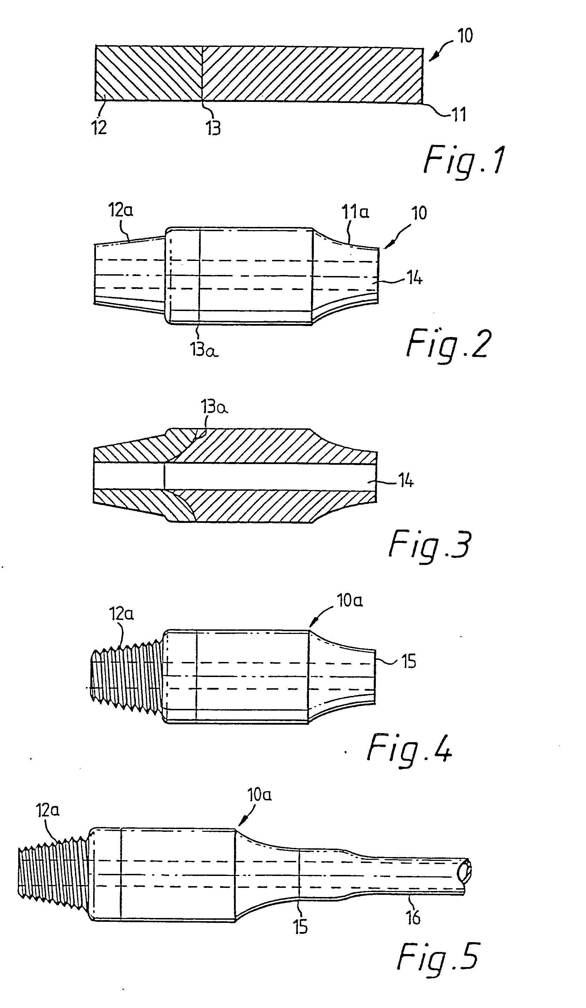

Referring now to Figure 1, a composite billet 10 is illustrated in side cross-sectional view and comprises a billet of a standard tool joint low alloy steel 11 welded to a billet of a corrosion resistant alloy 12 by means such as a friction welding process. The weld interface between the corrosion resistant alloy 12 and the standard alloy steel 11 is shown at 13.

After the composite billet has been prepared it is upset and pierced to provide a centrally located longitudinal bore 14 and forged on a hydraulic press on which it is worked by forward and backward extrusion to produce a rough tubular forging having the desired tool joint configuration which, as shown in Figures 2 and 3, has a tapered pin end 12a provided by a connector portion of corrosion resistant alloy 12 and a formed drill. pipe end 11a provided by a body portion of low alloy steel 11. During this process the interface 13 between the alloys 11 and 12 is deformed, becoming non-planar as shown at 13a, due to distortion of the material of the composite billet 10. It will be noted that the interface 13a between the two alloys extends in a substantially axial direction along a portion of the body of the forging. The non-planar nature of this interface 13a greatly strengthens the joint between the dissimilar alloys 11 and 12. Moreover, there are no problems arising from welded heat-affected zones adjacent the interface since the zone is heavily worked during forging so that its grain size is not significantly different from the bulk of the material.

After forging, the bore 14 and the surface of the pin end 12a are rough-machined. The forging may then be heat-treated and thereafter final machined, which includes cutting a male thread on the pin end 12a and machining a relatively smooth, flat weld face 15 on the drill pipe end 11a, to produce the finished tool joint 10a as shown in Figure 4. The male thread may be machined on the pin end 12a in any conventional threading manner for example machining or rolling of the threads.

In Figure 5, the finished tool joint 10a is shown welded to a standard upset drill pipe 16, for example by friction welding or flash welding, at weld face 15. The tool joint/drill pipe weld area may then be heat-treated to harden, toughen and/or relieve stress within the weld area. After the process has been completed, the result is a tool joint/drill pipe combination having a male-threaded pin end 12a of a desirable corrosion-resistant alloy for connection to a female-threaded box end of a tool joint on the end of an adjacent drill pipe.

The corrosion resistant alloy 12 of the tool joint pin end 12a provides extended resistance to stress corrosion cracking and is joined to the low alloy steel 11 forming the drill pipe end 11a by a non-planar weld interface 13a. The result is a tool joint 10a of much lower cost factor than a similar tool joint made entirely of the special corrosion-resistant alloy.

Through pre-selected heat treatments, after welding the tool joint 10a on the drill pipe 16, the overall strength and corrosion resistance may equal or exceed the strength and corrosion resistance of a similar drill pipe welded to a tool joint made entirely of the special corrosion-resistant alloy. Likewise, the resultant tool joint/drill pipe combination will exhibit superior corrosion resistance in the pin threaded area over that of the conventional tool joint material such as 4130 or 4137 steel. The increased cost of the tool joint according to the present invention over a standard low alloy steel tool joint is relatively insignificant when compared to the increased cost of making the entire tool joint of the corrosion-resistant alloy.

Suitable high alloy material for use in the production of tool joints of the present invention includes ASTM A-453 Grade 660, ASTM A-638 Grade 660 (A-286), 17-4PH (UNSS-17400), and INCONEL alloy 718 (UNS No. 7718). INCONEL is a trade mark. Alternative alloys having acceptable strength and corrosion resistance characteristics may of course be substituted. Conventional low alloy steels include AISI 4137H.

For sour well applications, a tool joint forged from a composite billet of A286 and 4137H is preferred. The compositions of these preferred alloys are shown in Table I.

TABLE I

| Alloy | | C | Mn | Si | P | S | Cr | Ni | Mo | Ti | Al | V | B | Fe |
|---|---|---|---|---|---|---|---|---|---|---|---|---|---|---|
| A 286 | Min | — | — | — | — | — | 13.5 | 24.0 | 1.0 | 1.90 | — | .1 | .003 | Bal |
| | Max | .08 | 2.0 | 1.0 | .025 | .025 | 16.0 | 27.0 | 1.5 | 2.35 | .035 | .5 | .010 | Bal |
| AISI-4137H | Min | .34 | 0.6 | .15 | — | — | 0.75 | — | .15 | — | — | — | — | Bal |
| | Max | .41 | 1.0 | .30 | .30 | .04 | 1.20 | — | .25 | — | — | — | — | Bal |

Such alloys require heat treatment after forging in order to develop strength and the composite forging may be given an appropriate heat treatment which may be a combination of those conventionally applied to the two component alloys of the composite. In the case of an A286/4137H composite we have found that a suitable heat treatment is 2 hours at 900°C, water quench, plus 16 hours at 720°C, air cool, plus 8 hours at 650°C, air cool.

**Claims**

1. A drill pipe tool joint comprises a tubular member (10a) of which one end (11a) is to be connected in use to the end of a drill pipe (16) and the other end (12a) has a threaded connector portion of corrosion-resistant alloy engageable with a complementary threaded portion on the adjacent end of a second drill pipe to releasably connect together the drill pipes to form a drill string characterised in that said one end (11a) of the tubular member (10a) is provided by a body portion of low alloy steel (11) and that the body and connector portions are metallurgically bonded together and worked during the shaping of the tool joint such that the interface (13a) therebetween is non-planar.

2. A drill pipe tool joint according to claim 1 characterised in that the threaded portion of said other end (12a) has either a male or a female thread.

3. A drill pipe tool joint according to claim 1 or claim 2 characterised in that the non-planar interface (13a) between the body and connector portions extends in a substantially axial direction along at least a part of the length of the tubular member (10a).

4. A drill pipe tool joint according to any one of the preceding claims characterised in that the low alloy steel (11) is AISI 4137H.

5. A drill pipe tool joint according to any one of the preceding claims characterised in that the corrosion resistant alloy (12) is selected from the group comprising ASTM A-453 Grade 660, ASTM A-638 Grade 660 (A-286), 17-4 PH (UNSS-17400) and INCONEL alloy 718 (UNS No. 7718).

## Revendications

1. Raccord d'outil pour tige de forage comprenant un organe tubulaire (10a) dont une extrémité (11a) doit être raccordée en service à l'extrémité d'une tige de forage (16) et dont l'autre extrémité (12a) comporte une partie de connexion filetée en un alliage résistant à la corrosion et pouvant venir en prise avec une partie filetée complémentaire sur l'extrémité adjacente d'une deuxième tige de forage pour réunir de façon amovible les tiges de forage en formant un train de tiges de forage, caractérisé en ce que ladite première extrémité (11a) de l'organe tubulaire (10a) est constituée par une partie de corps en acier faiblement allié (11) et en ce que les parties de corps et de connexion sont liées ensemble par voie métallurgique et sont façonnés pendant la mise en forme du raccord d'outil de façon que la surface de contact mutuel (13a) entre elles ne soit pas plane.

2. Raccord d'outil pour tige de forage selon la revendication 1, caractérisé en ce que la partie filetée de ladite autre extrémité (12a) porte un filetage mâle ou femelle.

3. Raccord d'outil pour tige de forage selon la revendication 1 ou 2, caractérisé en ce que la surface de contact mutuel non plane (13a) entre les parties de corps et de connexion s'étend dans une direction sensiblement axiale le long d'au moins une partie de la longueur de l'organe tubulaire (10a).

4. Raccord d'outil pour tige de forage selon l'une quelconque des revendications précédentes, caractérisé en ce que l'acier faiblement allié (11) est AISI 4137H.

5. Raccord d'outil pour tige de forage, selon l'une quelconque des revendications précédentes, caractérisé en ce que l'alliage résistant à la corrosion (12) est choisi parmi ASTM-A-453 qualité 660, ASTM A 638 qualité 660 (A-286), 17-4 PH (UNSS 17400) et l'alliage INCONEL 718 (UNS No. 7718).

## Patantansprüche

1. Bohrgestängeverbinder aus einem Rohrstück (10a), dessen eines Ende (11a) im Betrieb mit dem Ende einer Bohrstange (16) verbunden ist und dessen anderes Ende (12a) ein Gewinde aus einer korrosionsbeständigen Legierung aufweist, das in das Gewinde einer Bohrstange eingreift, zum lösbaren Verbinden von Bohrstangen, dadurch gekennzeichnet, daß das Rohrstück (10a) mit dem einen Ende (11a) aus einem niedriglegierten Stahl (11) hergestelltund metallurgisch mit dem Gewindeende (12a) verbunden und daß beide Teile (11a, 12a) während der Formgebung derart verformt werden, daß sich eine nichtebene Berührungsfläche (13a) ergibt.

2. Verbindungsstück nach Anspruch 1, gekennzeichnet durch ein Außen- oder ein Innergewinde (12a).

3. Verbindungsstück nach Anspruch 1 oder 2, dadurch gekennzeichnet, daß sich die nichtebene Berührungsfläche (13a) zumindest über einen Teil der Länge des Rohrstücks (10a) in einer im wesentlichen axialen Richtung erstreckt.

4. Verbindungsstück nach einem der Ansprüche 1 bis 3, dadurch gekennzeichnet, daß es sich bei dem niedriglegierten Stahl um den Stahl AISI 431 H handelt.

5. Verbindungsstück nach einem der Ansprüche 1 bis 4, dadurch gekenzeichnet, daß es sich bei der korrosionsbeständigen Legierung um eine der Legierungen ASTM A-453 660, ASTM A-538 660 (A-286), 17-4 PH (UNSS-17400) und INCONEL 718 (UNS-No. 7718) handelt.

Fig.1

Fig.2

Fig.3

Fig.4

Fig.5